# EUROPEAN PATENT APPLICATION

(11) **EP 4 769 331 A1**
(43) Date of publication of application: **01.07.2026**
(21) Application number: 24223190.0
(22) Date of filing: 24.12.2024
(51) Int. Cl.: G06V 10/764, G06V 10/82

(54) **COMPUTER-IMPLEMENTED METHOD FOR DETECTING ONE OR MORE DEFINED OBJECTS FROM A PLURALITY OF SINGLE-OBJECT IMAGES OBTAINED FROM A MULTI-OBJECT IMAGE, SUCH AS A SCENE IMAGE**

(71) Applicant: QuantumBasel AG, 4144 Arlesheim (CH)
(72) Inventor: Krishnakumar, Rajiv, 4144 Arlesheim (CH); Flöther, Frederik, 4144 Arlesheim (CH); Baglio, Julien, 4144 Arlesheim (CH); Romano, Nicole, 2822 Courroux (CH); Ruiz, Christian, 2822 Courroux (CH)
(74) Representative: Longchamp, Jean-Nicolas

(57) **Abstract**

The present invention relates to a computer-implemented method for producing a trained model for detecting one or more defined objects from a plurality of single-object images obtained from a multi-object image, such as a scene image. It relates also to a computer-implemented method for detecting one or more defined objects from a plurality of single-object images obtained from a multi-object image, such as a scene image.

## Description

### Technical Field

This invention relates to the field of machine learning and artificial intelligence-based computer-implemented inventions, specifically as it applies to the analysis of multi-object images. More precisely, the invention is concerned with the examination of single-object images that are derived from a multi-object image such as a scene image. The primary focus of this invention is the detection of specific objects, from these single-object images to classify the multi-object image as indicative or non-indicative for the specific objects. In a preferred embodiment, the methods of the present invention take advantage of the unique capabilities of quantum computing.

### Background of the invention

The detection of specific objects from images has become an increasingly important task in various fields such as computer vision, robotics, and artificial intelligence. With advancements in image acquisition technology and the proliferation of digital cameras or other images acquiring system, large datasets of images have been generated, providing valuable resources for developing accurate object detection systems.

Traditional object detection methods often rely on supervised learning approaches where annotated images are used to train a model. However, these methods face significant challenges when dealing with large datasets or complex scenes containing multiple objects. This is because the annotation process can be time-consuming and labor-intensive, and even small errors in annotation can propagate throughout the network, affecting its performance.

While the known machine-learning models hold great promise, their practical application is hindered by several significant challenges. Current models, particularly those based on deep learning, typically require vast computational resources for both training and inference. Training these models often demands access to large, diverse datasets, high-performance computing hardware (e.g., GPUs), and extended processing times. Similarly, the inference phase, in which the trained model is applied to new image data, can also be resource-intensive, in particular in terms of energy consumption, making it difficult to implement these models in real-time or resource-constrained environments.

The resource demands of these models pose a serious limitation to their broader adoption, especially in environments where computational efficiency, speed, and cost-effectiveness are critical. Furthermore, existing approaches often fail to balance the need for high accuracy with the need for resource-efficient operations, limiting their scalability and accessibility.

Furthermore, the "black box" nature of many deep learning models raises concerns about the interpretability of their predictions. This lack of transparency is a key issue in certain applications, where the reasons behind an algorithm's decision need to be understood and trusted.

Thus, there is an unmet need for a more resource-efficient method that can detect objects in multi-objects images. Such a method should reduce the computational and data resource requirements for both training and inference without compromising the quality and reliability of the results.

The present invention aims to address these challenges by providing an improved method for detecting objects in multi-objects images using machine learning applied to single-object images. This method is designed to reduce the computational and data resource demands typically associated with deep learning models, particularly during training and inference, while preserving or possibly even enhancing the accuracy and interpretability of the results. By optimizing model architecture, training strategies, and inference processes, the invention facilitates the broader deployment of machine learning-based analysis in diverse fields, overcoming the limitations of existing approaches.

### Summary of the invention

The object of the present invention is in particular to propose novel computer-implemented methods, with which the above-described drawbacks of the known methods are completely overcome or at least greatly diminished.

According to the present invention, these objects are achieved in particular through the elements of the independent claims. The invention aims to provide a method for detecting one or more defined objects from a plurality of single-object images obtained from a multi-object image, such as a scene image, by means of machine learning in a more efficient manner than the known methods. This is achieved by leveraging the advantages of Extreme Learning Machines, and especially Quantum Extreme Learning Machines, which offer faster training, improved computational efficiency, better generalization and optimization capabilities, and reduced energy consumption. Advantageous embodiments follow moreover from the dependent claims and the description.

In particular, the objects of the present invention are, in a first aspect, achieved by a computer-implemented method for producing a trained model for detecting one or more defined objects from a plurality of single-object images obtained from a multi-object image, such as a scene image, comprising:
a. receiving a training dataset comprising bags of feature vectors representing single-object images and corresponding target bag values;
b. initializing a first neural network of an attention-based Multiple Instance Learning model with a plurality of network parameters to compute an attention weight for each feature vector of the bags from which predicted bag values can be generated by the attention-based Multiple Instance Learning model;
c. training the first neural network by:
   i. processing, by the attention-based Multiple Instance Learning model, the plurality of bags of feature vectors to generate predicted bag values;
   ii. calculating, using a loss function, a prediction error based on a comparison between the predicted bag values and the corresponding target bag values;
   iii. updating at least a portion of the plurality of network parameters by optimizing the loss function;
d. outputting the trained model with the optimized network parameters for use in generating a bag value based on an input bag of feature vectors representing single-object images, wherein from the bag value the bag of feature vectors can be labelled as indicative or non-indicative for the one or more defined objects;
wherein the first neural network is an extreme learning machine (ELM).

This computer-implemented method offers several key advantages in the field of object detection from single-object images. By utilizing an attention-based Multiple Instance Learning model with a first neural network in the form of an extreme learning machine (ELM) to compute an attention weight for each feature vector, the system can improve accuracy in detecting defined objects, processing large datasets efficiently, and robustly handling noisy or incomplete data, such as a lack of single-object annotations. The ELM architecture also enables faster and more resource efficient training and inference than networks trained using backpropagation, in particular due to a significantly smaller number of trainable parameters, facilitating real-time decision-making, which is particularly valuable in situations where time is critical. For example, this can be of use in medical settings where diagnostics are time-sensitive in order to commence suitable treatments as soon as possible. In particular, efficient training and inference allows for reducing the energy consumption required for the training and inference in comparison with methods known in the prior art.

Furthermore, the attention-based mechanisms allow for dynamic weighting of feature importance, making the model adaptable to variations in data distribution or quality. This adaptability makes the model more robust and effective in situations where the data may be inconsistent or noisy, like scene images comprising moving objects or with high lighting variations.

The training data set can advantageously comprise feature vectors corresponding to images originating from the segmentation of a whole-scene image accomplished by means of a neural network or by non-neural methods such as thresholding, region-based, or boundary/edge-based methods. Alternatively, the single-object images could be acquired by an optical device, such as an image digitizer, that digitizes part or all of the scene image and segments individual objects in a single workflow. Furthermore, the segmentation process advantageously outputs information about the location of each single-object image in the scene image. The optional segmentation can advantageously be performed by means of a convolutional neural net such as the U-Net segmentation model [Ronneberger, O., Fischer, P., Brox, T.: U-net: Convolutional networks for biomedical image segmentation. In: MICCAI (2015)] or a computationally efficient vision transformer such as EfficientViT [Liu, J., Peng, H., Zheng, N.: EfficientViT: Memory Efficient Vision Transformer with Cascaded Group Attention. In: CVPR (2023)].

An optional step of feature vector normalization can be applied. By normalizing the feature vectors, the Extreme Learning Machine (ELM) can benefit from improved stability, as features with large ranges no longer dominate the learning process. This can lead to reduced overfitting and better generalization performance, making it easier for the model to learn complex relationships between input variables. Moreover, normalization helps eliminate scaling issues that may arise when features are measured in different conditions, as for instance luminosity in a scene image. By bringing all features to a common scale, ELMs can focus on learning the underlying patterns and relationships without being biased by differences in the image capture conditions. Another significant advantage of feature vector normalization is its impact on convergence speed. Normalized features enable the ELM to converge faster, i.e. saving resources, as the model is no longer hindered by large ranges or outliers in the data. Lastly, normalized features can lead to improved generalization performance, as they reduce overfitting and enhance the model's ability to generalize to unseen data.

A further optional step of classifying the feature vectors according to defined object types can be foreseen. In this case, a corresponding subset of feature vectors is selected and the step of processing the plurality of bags of feature vectors to generate predicted bag values is applied only to bags comprising only feature vectors of this subset.

It is important to note that for the training of the first neural network, the bags do not need to be comprised of feature vectors from a single multi-object image only, as long as the target bag value stays known, and the number of positive feature vectors stays above the detection limit of the model. For example, if the detection limit of the model is 20% and the ground truth says 80% of objects are of the defined object type, up to 80%-20% = 60% of feature vectors can be replaced with feature vectors from a different multi-object image.

The present method is highly versatile and can be applied to various object detection tasks in different contexts. For instance, it can be used for detecting cell types or abnormalities in whole-slide images of blood samples. Additionally, the method can be employed for identifying objects such as trees, buildings, roads, etc., in landscape images. Furthermore, the present method can be adapted for electronic component and/or defect detection on printed circuit boards (PCBs). Other examples relate to computer vision tasks in longitudinal image data, such as videos, that are relevant to, for instance, autonomous driving. These examples illustrate the breadth of applications possible with the present invention, which is not limited to these specific scenarios.

In a first preferred embodiment of the present invention, the parameters of all the layers of the first neural network are randomly initialised and only the parameters of the final layer are optimized during training. By initializing the parameters of all layers of the ELM-based neural network randomly, except for the final layer, which is optimized during training, the system can leverage the benefits of Extreme Learning Machines while still allowing for fine-tuned adjustments to be made at the output level. This approach allows for faster and more resource-efficient training and inference, particularly in terms of reducing energy consumption.

In another preferred embodiment of the present invention, the first neural network is implemented on a classical computer and is a fully-connected neural network. The use of a classical computer allows for more widespread deployment and accessibility of the system, as it can be run on existing hardware without requiring specialized or expensive equipment. Secondly, the fully-connected architecture enables the model to capture complex relationships between features in the data, which is particularly beneficial when working with high-dimensional single-object image datasets. This leads to improved accuracy and robustness in detecting defined objects from the images.

In a further preferred embodiment of the present invention, all layers except for the final layer of the first neural network are implemented on a quantum computer. By implementing all layers except for the final layer of the first neural network on a quantum computer, it is possible to leverage the unique computational capabilities of quantum computers, such as superposition, entanglement and interference, for the training of the model. In particular, this allowsthe model to learn from complex patterns and relationships in high-dimensional data (in the present context feature vectors comprising a high number of components), which enables it to detect subtle differences between the objects more accurately than with a classical implementation. Using a quantum computer can also lead to a significant reduction in energy consumption for training, which is particularly beneficial for large-scale machine learning tasks that require extensive computational resources. By offloading computationally intensive operations to the quantum computer, the system can reduce its overall carbon footprint, making it more sustainable and environmentally friendly. Quantum computing allows problems to be tackled with completely different algorithms from classical computing. Certain problems may thus be solved faster, more accurately, with less energy, or less stringent requirements in terms of input data volume and quality. These kinds of potential benefits are very much relevant to the model and application considered here.

In yet another preferred embodiment of the present invention, the feature vectors of the bags are encoded in the quantum state space of the qubits and initialised by applying random unitary transformations. This allows the system to utilize the unique properties of quantum states, such as superposition, entanglement and interference, to represent and manipulate the feature vectors in a highly efficient manner. By encoding the feature vectors in the quantum state space of the qubits, the system can take advantage of the high-dimensional Hilbert space offered by quantum mechanics, enabling the representation of complex relationships between features in the data. The application of random unitary transformations to initialize the qubit states introduces an element of randomness and uncertainty, which is beneficial for exploring the solution space and avoiding local minima. This approach enables the system to efficiently handle tasks that involve processing large amounts of data with high-dimensional feature spaces, such as single-object image analysis.

Furthermore, this implementation also enables the system to reduce energy consumption for training, as the random unitary transformations can be applied using a minimal number of quantum gates, resulting in shallow quantum circuits and eventually in a lower computational cost. This makes the method more sustainable and environmentally friendly, while still achieving state-of-the-art performance in single-object image analysis.

In a further preferred embodiment of the present invention, all layers except for the final layer of the first neural network form a fully-entangling quantum circuit. By forming a fully-entangling quantum circuit, the system can leverage the power of entanglement to represent complex relationships between features in the data in an extremely compact and efficient manner. This enables the model to capture subtle patterns and correlations that would be difficult or impossible to detect using classical computing methods. This implementation also allows for significant speedups and improvements in accuracy compared to classical computing, as the fully-entangling quantum circuit can efficiently explore a vast Hilbert space of possible solutions. Additionally, this approach leads to a reduction in energy consumption for training, as the entanglement-based computation can be performed using a minimal number of quantum gates.

In another preferred embodiment of the present invention, the feature vectors are obtained by segmenting, advantageously by means of a third neural network, at least part of a scene image, and wherein the minimal size of the bags of the training data set is determined based on the segmentation yield and the detection limit of the ground truth. This allows one to ensure that the bags of feature vectors of the training data are representative for the type of sample under investigation.

Advantageously, the minimal size of the bags of the training data set is determined based on the segmentation yield, the detection limit of the ground truth and an error value reflecting the statistical variation in bag sampling.

In a further preferred embodiment of the present invention, the model is trained on bags of feature vectors that have undergone a defined set of transformations, wherein advantageously the spatial distance between feature vectors stemming from different object classes is maximized and the spatial distance between feature vectors stemming from the same object class is minimized. The use of scene images provides a rich source of data for single-object image analysis, as it allows for the collection of large numbers of objects in a highly controlled and standardized manner. By applying a defined set of transformations to these images, the spatial distance between feature vectors stemming from different objects classes can be maximized, while the spatial distance between feature vectors stemming from the same object class is minimized.

This approach has several advantages. Firstly, it enables the model to capture subtle patterns and correlations that arise from the spatial organization of the objects within a multi-object image. Secondly, it allows for the efficient use of data, as the model can learn to recognize patterns in the spatial relationships between objects without requiring an excessive amount of training data.

The maximization of spatial distance between feature vectors stemming from different objects also enables the model to develop robustness to noise and variability in the data. This is because the model is trained on a diverse set of samples, each with its own unique characteristics, which helps reduce overfitting and improve generalizability.

In yet another preferred embodiment of the present invention, the method comprises further a step of bag-level augmentation. This allows for an optimal training of the first neural network without having access to large numbers of feature vectors corresponding to single-object images of rare samples. The bag-level augmentation can comprise, for instance, bag subsampling (random selection of a subset of instances from the bag to create a new bag, while the label of the new bag remains the same as the original bag), bag merging (combination of instances from two or more bags to create a new bag, while the label of the new bag is typically decided based on some logical operation (e.g., AND, OR) applied to the labels of the original bags), instance transformation (applying instance-level transformations (e.g., flipping, rotating) to every instance in the bag), noise addition (addition of some form of noise to the instances within the bag, as for instance Gaussian noise), or feature-level augmentation (modification of the feature vectors in the bag in a manner consistent across all instances).

Advantageously, when single-object annotations are not available, the minimal size of the bags in the training data set is given by the detection limit of the ground truth and the yield of the segmentation step. The minimum bag size can be calculated from the detection limit of the ground truth, the theoretical best possible detection limit of the model, and the yield of the segmentation step. The model's theoretical best detection limit for a bag size of M feature vectors is 1/M, and the segmentation yield Ys is the percentage of objects in the multi-object image examined by the model. If a limit of detection for the ground truth D, for instance 10%, is known, the bag size M that must be examined is found by: 1/(M*Ys) >= D + ε, where ε is an error allowing for statistical variations in bag sampling. This yields a minimum bag size of M=1 /((D+ε)*Ys). On the other hand, the maximum bag size is not maximally bounded. One limitation may be the VRAM size, but this in principle can be overcoming by batching the data. However, the number of features per vector is limited by the by the number of available qubits. The latter can be extended beyond the mere number of available qubits on the quantum hardware thanks to the use of advanced quantum circuit techniques such as circuit knitting or mid-circuit measurements. These considerations show how such techniques can be adapted to current and future hardware, and therefore demonstrate how the present methods can improve as the hardware improves.

According to a second aspect, the present invention relates to a computer-implemented method for detecting one or more defined objects from a plurality of single-object images obtained from a multi-object image, such as a scene image, comprising the following steps:
a. Receiving feature vectors representing the plurality of single-object images;
b. Defining at least one bag of feature vectors representative for the multi-object image, wherein each feature vector represents a single-object image;
c. Deriving from the at least one bag of feature vectors a bag value by means of a trained model according to any one of the claims 1 to 9.
d. Labelling the bag as indicative or non-indicative for the one or more defined objects from the bag value;
e. Classifying the multi-object image as indicative of the one or more defined objects when an indicative value dependent on the number of bags of feature vectors labelled as indicative meets or exceeds a predetermined threshold value.

Thanks to this method, it is in particular possible to reliably and automatically detect the presence of one or more objects from single-object images obtained from a multi-object image, for instance a scene image.

By utilizing an attention-based Multiple Instance Learning model with an extreme learning machine (ELM) comprising a first neural network to compute an attention weight for each feature vector, the system can improve accuracy in detecting defined objects, processing large datasets efficiently, and robustly handling noisy or incomplete data. The ELM architecture also enables rapid inference, facilitating real-time decision-making, which is particularly valuable in situations where time is critical. Moreover, rapid inference allows for reducing the energy consumption required in comparison with methods known in the prior art.

The single-object images originate advantageously from the segmentation of a scene image accomplished by means of a neural network or by non-neural methods such as thresholding, region-based, or boundary/edge-based methods. Alternatively, the single-object images could be acquired by an optical device, such as an image digitizer, which digitizes part or all of the scene image and segments individual objects in a single workflow. Furthermore, the segmentation process advantageously outputs information about the location of each single-object image in the scene image.

The embedding of each single-object image into a feature vector is advantageously performed by a second neural network that is advantageously trained by self-supervised learning on single-object images derived from at least part of a multi-object image that have undergone defined set of transformations, wherein advantageously the second neural network maximizes the spatial distance between feature vectors stemming from different object classes and minimizes the spatial distance between feature vectors stemming from the same object class.

In step b., at least one bag of feature vectors representative of the multi-object image is defined. The number of bags per image can be advantageously from 1 to 10 but could also be more than 10. The bag size can be from dozen of objects to millions of objects. The minimum bag size can be calculated from the detection limit of the ground truth, the best possible detection limit of the model, and the yield of the segmentation step. The model's theoretical best detection limit for a bag size of m feature vectors is 1 /M, and the segmentation yield can be denoted Ys. If a limit of detection of 10% is assumed, the minimum bag size M is found by: 1/(M*Ys) >= 10% or by M=1/(10%*Ys). On the other hand, the maximum bag size is not maximally bounded. One limitation may be the VRAM size, but this in principle can be overcoming by batching the data. However, the number of features per vector is limited by the by the number of available qubits. The latter can be extended beyond the mere number of available qubits on the quantum hardware thanks to the use of advanced quantum circuit techniques such as circuit knitting or mid-circuit measurements.

An optional step of feature vector normalization can be applied and a further optional step of classifying the feature vectors to belong to defined object types can be foreseen. In this case, a subset of feature vectors can be selected and the step of deriving from the at least one bag of feature vectors a bag value is done to a bag comprising only feature vectors of this subset.

Finally in step e., the multi-object image is classified as indicative of the one or more defined objects when an indicative value dependent on the number of bags of feature vectors labelled as indicative meets or exceeds a predetermined threshold value. Important to note is that the number of bags can be one, in particular when the size of the bag is chosen such that the bag is for sure relevant for the multi-object image; meaning that the bag and the multi-object image can only have the same label.

In a first preferred embodiment of this second aspect, the single-object images are obtained by segmenting at least a part of the multi-object image, advantageously by means of a third trained convolutional neural network. The segmentation is advantageously performed by means of a U-Net architecture [Ronneberger, O., Fischer, P., Brox, T.: U-net: Convolutional networks for biomedical image segmentation. In: MICCAI (2015)] followed by Non-Maximum Suppression to identify probable objects.

In another preferred embodiment of the second aspect of the present invention, the method further comprises a step of labelling at least a part of the single-object images corresponding to the feature vectors of the bag as indicative or non-indicative of the one or more defined objects. This allows prediction on the single-image level for each image of the bag and to identify which image shows the defined object types. This allows also for counting the number of identified objects in the sample which can be important in different situations as for instance, in quality control, where monitoring the presence and quantity of defects or anomalies in a manufactured product is essential, in agriculture, where detecting and counting plant diseases or pests can inform crop management decisions, or in materials science, where tracking the formation and distribution of microstructures within a material can impact its performance and reliability, or in biotechnology, where identifying and quantifying biomarkers or specific cells in biological samples is vital for disease diagnosis and treatment.

In a further preferred embodiment of the second aspect of the present invention, the method comprises a step of generating a heat map of the labelled objects present within the at least part of a multi-object image, said heat map being produced based on spatial location data for each of said labelled objects. This allows for identifying in the multi-object image the presence and position of the defined objects.

In yet another preferred embodiment of the second aspect of the present invention, the method comprises a step of classifying the single-object images into object classes and wherein the bag of feature vectors comprises only feature vectors corresponding to one object class. One advantage of this embodiment is that it enables focused analysis and optimization for specific object classes, which can lead to improved performance, efficiency, and interpretability of the model. By classifying single-object images into object classes and selecting a bag of feature vectors corresponding to only one object class, the method allows for tailored model development, where the model is specifically designed to handle one particular type of object or scenario, resulting in better performance on that specific task.

This focused approach can lead to significant advantages in various applications, such as developing models specifically tailored to detect and analyse certain diseases or conditions in medical imaging, creating models optimized for recognizing and manipulating specific objects or scenarios in robotics, and designing models for detecting defects or anomalies in specific materials or products in quality control.

In a further preferred embodiment of the second aspect of the present invention, the indicative value is the percentage of bags of feature vectors labelled as indicative. By using a percentage-based indicative value, the method can provide a more accurate representation of the likelihood that a multi-object image contains a specific object type. Moreover, the percentage-based indicative value makes it easier to understand and communicate the results of the analysis, as it provides a clear and concise measure of the probability of interest. Finally, by using a proportion-based approach, the method can be more robust to variations in the number of bags or feature vectors, which can improve its overall performance and reliability.

The multi-object images are advantageously lidar images, especially lidar images of a landscape, where the objects are in particular trees. These examples highlight the application of the present invention in specific domains, where lidar images of landscapes provide valuable data for object detection and analysis.

For instance, in forestry, the ability to identify and analyse trees within a landscape is crucial for forest management, biodiversity assessment, and environmental monitoring. The present method can be particularly useful in this context, as it enables the identification of specific tree types, their locations, and quantities, facilitating informed decision-making about reforestation efforts, wildlife habitat preservation, and forest health.

In geographic information systems (GIS), lidar images provide detailed topographic information, which is essential for mapping, surveying, and spatial analysis. The present method can be applied to extract relevant features from these images, such as terrain elevation, slope, and aspect, to support a wide range of applications, including land-use planning, urban development, and environmental modelling.

Furthermore, in agriculture, the identification of specific crops or vegetation types within a landscape is vital for precision agriculture, crop monitoring, and yield prediction. The present method can be adapted to detect and analyse various plant species, enabling farmers to optimize irrigation, fertilization, and pest management practices, ultimately improving crop yields and reducing environmental impact.

By leveraging lidar images of landscapes and the present invention's object detection capabilities, these examples demonstrate the potential for applications in forestry, GIS, agriculture, and other related fields, where detailed spatial analysis is essential.

The present invention's object detection capabilities can also be applied to material inspection, where high-quality products require precise analysis and monitoring. For example, the present method can be used to identify defects or anomalies in manufactured products, such as cracks or irregularities on road surfaces, enabling early intervention and reducing maintenance costs.

Furthermore, in quality control, the ability to detect specific objects or features within a product is essential for ensuring conformity to industry standards. The present method can be adapted to identify defective components, misaligned parts, or other quality-related issues, facilitating rapid sorting and removal of non-conforming products from production lines.

In 3D printing, the invention's object detection capabilities can help monitor the formation of microstructures within printed materials, ensuring that they meet specific requirements for mechanical properties, thermal conductivity, or other characteristics. By identifying defects or anomalies in real-time, manufacturers can adjust their processes to produce high-quality prints with improved reliability and performance.

The present invention's object detection capabilities can also be applied to robotic assembly, where precise identification of components is essential for efficient and accurate manufacturing. The present method can, for example, be used to guide robots in identifying specific objects or features within a scene, enabling them to precisely grasp and manipulate components during assembly processes.

Furthermore, in autonomous navigation, the ability to detect specific objects or features is crucial for safe and efficient movement. The present method can be adapted to identify obstacles, such as trees or other vegetation types, facilitating real-time decision-making about route adjustments and speed control. Robots can then navigate complex environments with greater accuracy and reliability.

In robotic inspection, the invention's object detection capabilities can help inspect products for defects or anomalies, ensuring that they meet specific quality standards. By identifying features such as surface texture, colour, or shape, robots can detect defects in real-time, facilitating rapid sorting and removal of non-conforming products from production lines.

According to a third aspect, the present invention relates to a data processing system comprising means for carrying out the steps of any one of the methods of the present invention.

According to a fourth aspect, the present invention relates to a computer program product comprising instructions which, when the program is executed by a computer, cause the computer to carry out the steps of any one of the methods of the present invention.

According to a fifth aspect, the present invention relates to a computer-readable storage medium comprising instructions which, when executed by a computer, cause the computer to carry out the steps of any one of the methods of the present invention.

### Brief description of the drawings

- Figure 1 shows the workflow of a preferred embodiment of the method according to the first aspect of the present invention;
- Figure 2 shows the workflow of a preferred embodiment of the method according to the second aspect of the present invention;
- Figure 3 illustrates the use of an Extreme Learning Machine as first neural network of the attention-based Multiple Instance Learning model;
- Figure 4 shows an example of a bag of feature vectors representing images of trees;
- Figure 5 shows the unweighted attention values for the bag of feature vectors of Figure 4;
- Figure 6 shows a comparison of the accuracy of the present methods with the prior art method;
- Figure 7 shows a comparison of the sensitivity of the present methods with the prior art method;
- Figure 8 shows a comparison of the specificity of the present methods with the prior art method; and
- Figure 9 shows a comparison of Area Under the Curve (AUC) of the present methods with the prior art method.

### Detailed description of preferred embodiments and presentation of experimental results

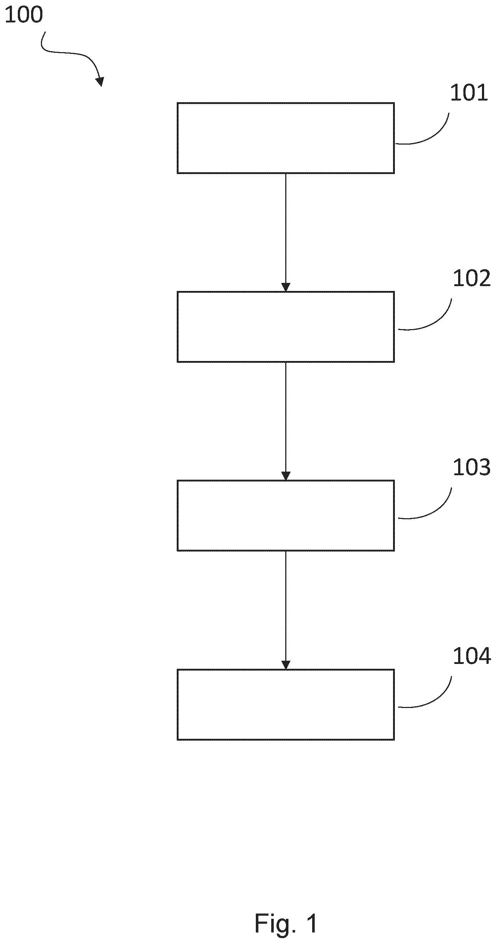

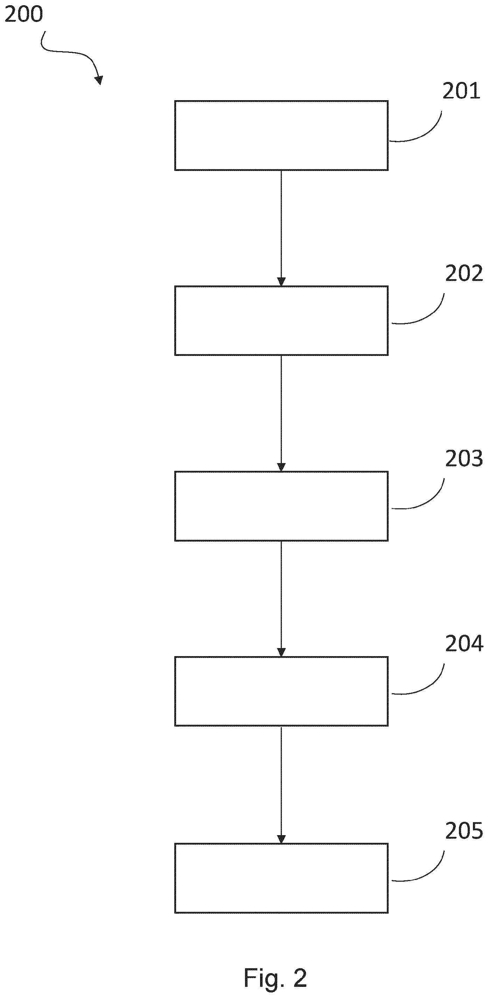

Preferred embodiments of the method according to the first aspect and the second aspect of the present invention are presented in Figures 1 and 2 and results of the methods are presented in the other figures. While the embodiments presented here concern the detection of trees from a landscape image, the present method is highly versatile and can be applied to various object detection tasks in different contexts. For instance, it can be used for detecting cell types or abnormalities in whole-slide images of blood samples. Additionally, the method can be employed for identifying objects such as trees, buildings, roads, etc. in landscape images. Furthermore, the present method can be adapted for electronic component and/or defect detection on printed circuit boards (PCBs). These examples illustrate the breadth of applications possible with the present invention, which is not limited to these specific scenarios.

Figure 1 illustrates the workflow of a preferred embodiment 100 of the method for producing a trained model for detecting one or more defined objects from a plurality of single-object images obtained from a multi-object image, such as a scene image. Method 100 comprises a first step 101 where a training dataset comprising bags of feature vectors representing single-object images of multi-object images and corresponding target bag values is received. The training data set can advantageously comprise feature vectors corresponding to images originating from the segmentation of a multi-object image accomplished by means of a neural network or by non-neural methods such as thresholding, region-based, or boundary/edge-based methods. Alternatively, the single-object images could be acquired by an optical device, such as an image digitizer, which digitizes part or all of the multi-object image and segments individual objects in a single workflow. Furthermore, the segmentation process advantageously outputs information about the location of each single-object image in the multi-object images.

In step 102, a first neural network of an attention-based Multiple Instance Learning model is initialized with a plurality of network parameters to compute an attention weight for each feature vector of the bags from which predicted bag values can be generated by the attention-based Multiple Instance Learning model. The first neural network is according to the present invention an Extreme Learning Machine.

In step 103, the first neural network is trained by (i) processing, by the attention-based Multiple Instance Learning model, the plurality of bags of feature vectors to generate a predicted bag value (ii) calculating, using a loss function, a prediction error based on a comparison between the predicted bag values and the corresponding target bag values, and (iii) updating at least a portion of the plurality of network parameters by optimizing the loss function.

Finally, in step 104, the trained model with the optimized network parameters is outputted for use in generating a bag value based on an input bag of feature vectors representing single-object images of a sample, wherein from the bag value the bag of feature vectors can be labelled as indicative or non-indicative for the defined objects.

Figure 2 illustrates the workflow of a preferred embodiment 200 of the method for detecting one or more defined objects from a plurality single-object images obtained from a multi-object image, such as a scene image. Method 200 comprises a first step 201 where each single-object image is embedded into a feature vector by means of a second trained neural network, advantageously a trained convolutional neural network or a trained transformer neural network. Details of the second neural network were presented above.

In step 202, at least one bag of feature vectors representative for the multi-object image is defined. The number of bags per sample can be advantageously from 1 to 10 but could also be more than 10. The bag size can be from dozens of objects to millions of objects. The minimum bag size can be calculated from the detection limit of the ground truth, the best possible detection limit of the model, and the yield of the segmentation step. The model's theoretical best detection limit for a bag size of m feature vectors is 1/M, and the segmentation yield can be denoted Ys. If a limit of detection of 10% is assumed, the minimum bag size is found by: 1/(M*Ys) >= 10%.

In step 203, a bag value is derived by means of the trained model presented in Figure 1. The bag value can then be compared in step 204 to a predetermined threshold value for determining the label of the bag, or to a previous value in order, for instance, to determine the evolution of the number of defined objects images of the same scene acquired at different times.

Finally in step 205, the sample is classified as indicative of the one or more defined objects when an indicative value dependent on the number of bags of feature vectors labelled as indicative meets or exceeds a predetermined threshold value. Important to note is that the number of bags can be one, in particular when the size of the bag is chosen such that the bag is for sure relevant for the multi-object image; meaning that the bag and the multi-object image can only have the same label.

As mentioned above, the trained model of the first aspect of the present invention can be used to make single-object predictions. This information, combined with information on the localization of each object that can be outputted by the first network, allows for the creation of a heat map that overlies the single-image prediction on the original multi-object image.

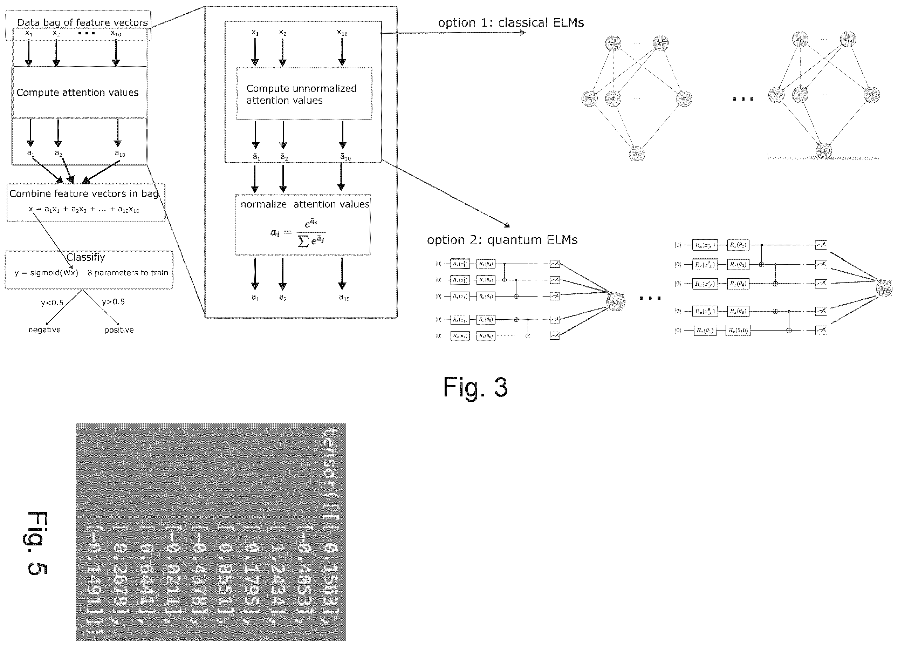

Figure 3 presents two specific embodiments for an attention-based Multiple Instance Learning model used in the training method as well as in the detection method according to the present invention. As schematically depicted on the left side of this image, an attention-based Multiple Instance Learning model receives bags of feature vectors (here marked as x₁ to x₁₀) and for each feature vector in a bag, an attention value (or weight) is computed. In a further step, the feature vectors in the bag are combined to form a bag vector by a weighted sum, where the attention values serve as the weights for each feature vector. Finally, a bag value y is derived from the bag vector by applying a non-linear transformation, such as an activation function like ReLU, tanh, or a sigmoid function. Here a threshold value 0.5 has been selected, meaning that for y≤0.5 the bag is labelled negative and for y>0.5 the bag is labelled positive.

As illustrated in the middle panel of Figure 3, the computation of the attention values is actually a two-step process where in a first step unnormalized attention values are derived before in a second step the attention values are normalized. The present invention proposes to use an Extreme Learning Machine model to compute the unnormalized attention values. More specifically, the present invention proposes to use either (1) a classical Extreme Learning Machine or (2) a Quantum Extreme Learning Machine for that purpose.

In a specific implementation of option (1), the Extreme Learning Machine takes the form of a fully connected neural network of three layers (one input, one hidden, and one output layer). All the parameters (weights and nodes) of the hidden layer are randomly initialized and the weights of the first layer (more precisely the weight connecting the nodes of the input layer to the nodes of the hidden layer) are kept fixed during training. On the contrary, the weights of the second layer (more precisely the weight connecting the nodes of the hidden layer with the node of the output layer) are optimized during training. This allows for a very efficient and resource-saving training as well inference. Assuming that each feature vector has eight components (features) and that the hidden layer comprises 1024 nodes, only 1024 parameters need to be optimized while in the state of the art, the parameters of the first layer are also trained leading to 8x1024 + 1024 parameters to be optimized.

In a specific implementation of option (2), all layers of the Extreme Learning Machine except for the final layer are implemented on a quantum computer. First and as illustrated in the right lower panel of Figure 3, the feature vectors are encoded in the quantum state space of the qubits and initialised by applying random unitary transformations. The quantum circuit consists of a layer of Rx gates where the embedded angles consist of the values of the features as also described here:
https://docs.pennylane.ai/en/stable/code/api/pennylane.AngleEmbedding.html. There is 1 qubit for each feature (e.g. 8 qubits for 8 features in the present case). Then basic entangling layers consisting of a layer of single qubit Rx gates with random parameters, followed by a layer of CNOT gates as also
described here: https://docs.pennylane.ai/en/stable/code/a pi/pen nylane. BasicEn tanglerl_ayers.html, are used. These basic entangling layers can be applied several times. The Z expectation values of all qubits are then measured and used to construct the next feature vector.

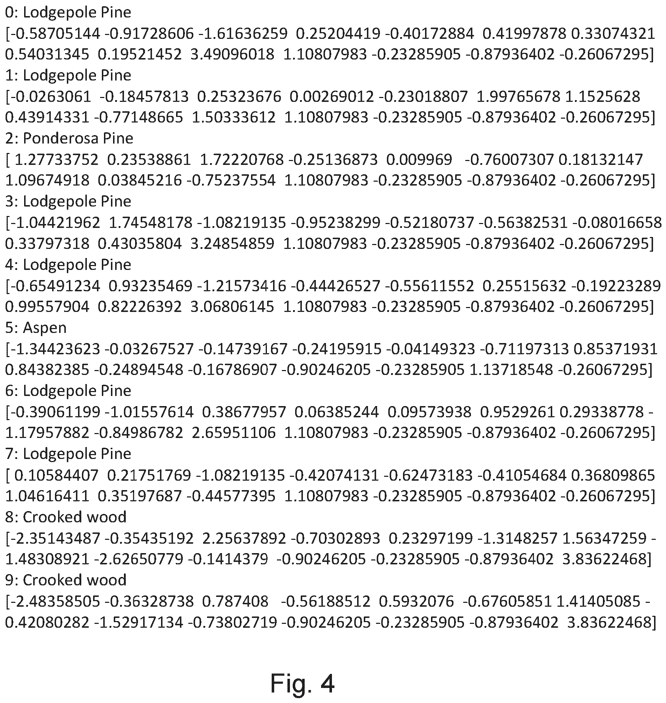

The methods described for the present invention have been tested for the detection of trees of a defined tree type from landscape images and the results of these tests are presented here. From these landscape images, feature vectors representing different tree types were created. The features vectors representing the trees were obtained from the freely available database "Covertype" (see https://archive.ics.uci.edu/dataset/31/covertype). Figure 4 shows example of feature vectors for different tree. The component of the feature vectors correspond to ['Elevation', 'Aspect', 'Slope', 'Horizontal_Distance_To_Hydrology', 'Vertical_Distance_To_Hydrology', 'Horizontal_Distance_To_Roadways', 'Hillshade_9am', 'Hillshade_Noon', 'Hillshade_3pm', 'Horizontal_Distance_To_Fire_Points', 'Wilderness_Area_0', 'Wilderness_Area_1','Wilderness_Area_2', 'Wilderness_Area_3'] of the trees (for more information see Blackard et al.,"Comparative Accuracies of Artificial Neural Networks and Discriminant Analysis in Predicting Forest Cover Types from Cartographic Variables", Computers and Electronics in Agriculture 24(3):131-151). The models of the present invention were trained to detect trees from the Ponderosa Pine type.

In a first step of the training method, bags of 10 feature vectors were created with a defined label (label = 1 if the bag comprise a feature vector representing a Ponderosa Pine) as illustrated in Figure 4. 800 bags of feature vectors with a known label were formed for training the training method of the present invention. Similarly, a validation set of 200 bags was created. Advantageously, the bags of the training data set comprise either a 0 or 1 feature vector of the determined tree type.

Returning to the methods of the invention presented in the figures, Figure 5 shows the results of the weighted sum of the attention weights for all the feature vectors of the bag of Figure 4 (see Figure 3, left panel). Please note that throughout the whole application the terms vectors and tensors are meant to be synonyms.

As can be seen in Figure 5, the 3rd component of this resulting vector has the highest value, which is not surprising since it corresponds to the 3rd feature vector of the bag of Figure 4, i.e. the feature vector corresponding to the Ponderosa Pine, precisely the type of tree which corresponds to a positive (=1) label. In a further step, the resulting bag vector is passed through a linear and a sigmoid layer of the Multiple Instance Learning model to obtain a scalar bag value y. In the present example, if y≤0.5 the bag is labelled negative and if y>0.5 it is labelled positive.

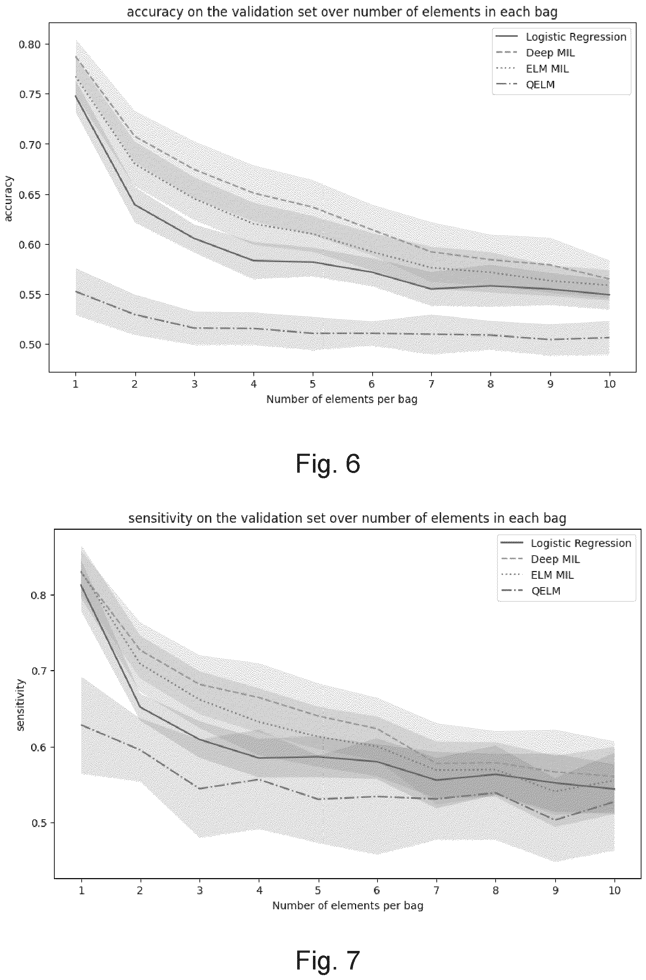

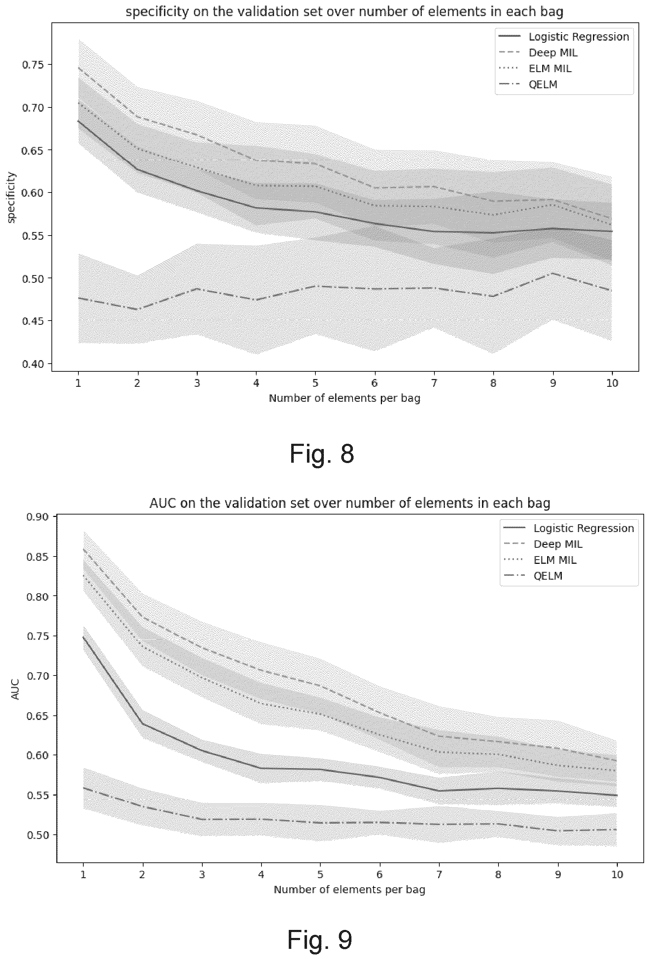

It is important to understand that the present invention proposes to use a first neural network in the form of an Extreme Learning Machine to compute the unweighted attention values. The steps of normalising the attention values, combining the feature vectors of a bag, and computing the bag value are carried out using methods known from the prior art. Figures 6 to 9 show the experimental results for accuracy, sensitivity, specificity, and area under the curve obtained in the detection of Ponderosa Pine from the above-mentioned database as a function of the number of elements per bag for two known methods, more specifically Averaging + Logistic Regression and Traditional Multiple Instance Learning (using a Feedforward Neural Network as the first network), and the two options for the detection method of the present invention (Classical ELM and Quantum ELM (QELM) as the first neural network).

Figures 6 to 9 present preliminary experimental results showcasing the ability of the methods of the present invention for detecting one or more defined tree types. As can be seen in these Figures, for Option 1, i.e. classical ELM as the first neural network of the MIL model, the metrics are similar to those obtained from traditional MIL-based detection methods but, as explained above, require much less computer resources for training and inference. It is important to note that for both options (classical ELM and quantum ELM) the accuracy and AUC values are above 0.5, indicating that the model has learned from the data and is providing useful information. Furthermore, in the quantum ELM model the AUC is more stable as the number of non-indicative elements in the bag increases. This indicates that the trade-off between sensitivity and specificity is also stable. As a result, the predictive value of the model is less susceptible to fluctuations in bag size and prevalence of the object type of interest. Furthermore, both the quantum and classical ELM models have not been optimized yet so that the presented results are a baseline and are likely to improve with an advanced hyper-parameter optimization.

For the classical ELM implementation, the tests were performed on a CPU Apple M2 with 32 GB of memory and on a Nvidia A100 40GB RAM. The quantum ELM implementation, the quantum computing part was performed on an IBM QPU with a Heron r2 processor and 156 qubits, and the classical part on a CPU Apple M2 with 32 GB of memory.

## Claims

1. A computer-implemented method for producing a trained model for detecting one or more defined objects from a plurality of single-object images obtained from a multi-object image, such as a scene image, comprising:
a. receiving a training dataset comprising bags of feature vectors representing single-object images and corresponding target bag values;
b. initializing a first neural network of an attention-based Multiple Instance Learning model with a plurality of network parameters to compute an attention weight for each feature vector of the bags from which predicted bag values can be generated by the attention-based Multiple Instance Learning model;
c. training the first neural network by:
i. processing, by the attention-based Multiple Instance Learning model, the plurality of bags of feature vectors to generate predicted bag values;
ii. calculating, using a loss function, a prediction error based on a comparison between the predicted bag values and the corresponding target bag values;
iii. updating at least a portion of the plurality of network parameters by optimizing the loss function;
d. outputting the trained model with the optimized network parameters for use in generating a bag value based on an input bag of feature vectors representing single-object images, wherein from the bag value the bag of feature vectors can be labelled as indicative or non-indicative for the one or more defined objects;
wherein the first neural network is an extreme learning machine (ELM).

2. The method of claim 1, wherein the parameters of all the layers of the first neural network are randomly initialised and only the parameters of the final layer are optimized during training.

3. The method according to claim 2, wherein the first neural network is implemented on a classical computer and is a fully connected neural network.

4. The method according to claim 2, wherein all layers except for the final layer of the first neural network are implemented on a quantum computer.

5. The method according to claim 4, wherein the feature vectors of the bags are encoded into a basis qubit state and initialised by applying random unitary transformations.

6. The method according to claim 4 or 5, wherein all layers except for the final layer of the first neural network form a fully entangling quantum circuit.

7. The method according to any one of the preceding claims, wherein the feature vectors are obtained by segmenting, advantageously by means of a third neural network, at least part of the multi-object image, and wherein the minimal size of the bags of the training data set is determined based on the segmentation yield and the detection limit of the ground truth.

8. The method according to claim 7, wherein the model is trained on bags of feature vectors that have undergone defined set of transformations, wherein advantageously the spatial distance between feature vectors stemming from different object classes is maximized and the spatial distance between feature vectors stemming from the same object class is minimized.

9. The method according to any one of the preceding claims further comprising a step of bag-level augmentation.

10. A computer-implemented method for detecting one or more defined objects from a plurality of single-object images obtained from a multi-object image, such as a scene image, comprising the following steps:
a. Receiving feature vectors representing the plurality of single-object images;
b. Defining at least one bag of feature vectors representative for the multi-object image, wherein each feature vector represents a single-object image;
c. Deriving from the at least one bag of feature vectors a bag value by means of a trained model according to any one of the claims 1 to 9.
d. Labelling the bag as indicative or non-indicative for the one or more defined objects from the bag value;
e. Classifying the multi-object image as indicative of the one or more defined objects when an indicative value dependent on the number of bags of feature vectors labelled as indicative meets or exceeds a predetermined threshold value.

11. The method according to claim 10, wherein each single-object image was embedded into a feature vector by means of a second trained neural network, advantageously a trained convolutional neural network or a trained transformer neural network.

12. The method according to any one of the claims 10 or 11, wherein the single-object images are obtained by segmenting at least a part of the multi-object image, advantageously by means of a third trained convolutional neural network, and wherein the minimal size of the at least one bag is given by the segmentation yield and the detection limit of the ground truth.

13. The method according to any one of the claims 10 to 12, further comprising a step of labelling by the model of any one of the claims 1 to 9 at least a part of the single-object images corresponding to the feature vectors of the bag as indicative or non-indicative of the one or more defined objects.

14. The method according to claim 13, wherein the method comprises a step of generating a heat map of the labelled objects present within the at least part of a multi-object image, said heat map being produced based on spatial location data for each of said labelled objects.

15. The method according to any one of the claims 10 to 14, wherein the method comprises between steps a. and b. a step of classifying the single-object images into object classes and wherein the bag of feature vectors comprises only feature vectors corresponding to one object class.

16. The method according to any one of the claims 10 to 15, wherein the indicative value is the percentage of bags of feature vectors labelled as indicative.

17. A data processing system comprising means for carrying out the steps of the method of claim 1 to 9 and/or the steps of the method of claim 10 to 16.

18. A computer program product comprising instructions which, when the program is executed by a computer, cause the computer to carry out the steps of the method of claim 1 to 9 and/or the steps of the method of claim 10 to 16.

19. A computer-readable storage medium comprising instructions which, when executed by a computer, cause the computer to carry out the steps of the method of claim 1 to 9 and/or the steps of the method of claim 10 to 16.

20. The method according to any one of the preceding claims 1 to 9 or 10 to 16, wherein the multi-object image is a lidar image, especially a lidar image of a landscape, and the one or more defined objects are advantageously trees.

21. The method according to any one of the preceding claims 1 to 9 or 10 to 16, wherein the multi-object image is an image of an electronic printed board, and the objects are electronic components and/or defects in the board.
